# EUROPEAN PATENT SPECIFICATION

(11) **EP 4 191 359 B1**
(45) Date of publication and mention of the grant of the patent: **20.08.2025**
(21) Application number: 22207729.9
(22) Date of filing: 16.11.2022
(51) Int. Cl.: G05D 1/00, A01B 69/00, A01B 79/00

(54) **AUTOMATIC TRAVELING METHOD, WORK VEHICLE, AND AUTOMATIC TRAVELING SYSTEM**
AUTOMATISCHES FAHRVERFAHREN, ARBEITSFAHRZEUG UND AUTOMATISCHES FAHRSYSTEM
PROCÉDÉ DE DÉPLACEMENT AUTOMATIQUE, VÉHICULE DE TRAVAIL ET SYSTÈME DE DÉPLACEMENT AUTOMATIQUE

(30) Priority: 01.12.2021 JP 2021195119
(43) Date of publication of application: 07.06.2023
(73) Proprietor: Yanmar Holdings Co., Ltd., Osaka-shi, Osaka (JP)
(72) Inventor: NISHII, Yasuto, Okayama (JP); MURAYAMA, Masaaki, Okayama (JP); HORI, Tomomasa, Okayama (JP)
(74) Representative: Novagraaf International SA

(56) References cited:
- EP-A1- 3 351 079
- EP-A1- 3 900 509
- US-A1- 2017 177 002
- US-A1- 2018 206 391
- US-A1- 2019 227 561

## Description

### TECHNICAL FIELD

The present invention relates to an automatic traveling method, a work vehicle, and an automatic traveling system for causing a work vehicle to perform automatic traveling in a field.

### BACKGROUND ART

Conventionally, a work vehicle such as a combine harvester that perform automatic traveling in a field has a display part that displays, on a map of the field, an automatic traveling route for performing automatic traveling and an own vehicle position of the work vehicle.

For example, Patent Document 1 relates to an automatic traveling system, in which a traveling screen indicating how a rice transplanter is traveling automatically is displayed on an operation display part of a wireless communication terminal. On the traveling screen, a field image is displayed, and within the field image, a work area image indicating a work area, an automatic work path image indicating a straight route, an automatic turning path image indicating a coupled route, a work vehicle position image indicating the current position of the rice transplanter, a start position image indicating the most start point of the route, and an end position image indicating the most end point of the route are displayed. In Patent Document 1, one of the conditions for starting automatic traveling is that the rice transplanter is located within a predetermined distance range of the most start point of the route. In addition, the prior art documents EP 3 900 509 A1 and US 2019/227561 A1 disclose the similar display of a guideline.

### PRIOR ART DOCUMENT

### PATENT DOCUMENT

Patent Document 1: Japanese Patent No. 6917935

### SUMMARY OF INVENTION

### TECHNICAL PROBLEM

In conventional technologies such as the one in the patent document 1, the worker needs to manually operate the work vehicle and make the work vehicle travel within a predetermined distance range of the most start point of the route in order to start automatic traveling. At this time, the worker makes the work vehicle travel while confirming the most start point of the route and the own vehicle position of the work vehicle in the field displayed on the display part. However, since the field is a wide area and unworked regions and already worked regions may coexist, the area around the own vehicle position in the field may be enlarged and displayed on the display part so that the worker can make the work vehicle travel while confirming the area around the own vehicle position. In such a case, the position of the most start point of the route may fail to be displayed on the display part, and the worker may be unable to determine the position of the most start point of the route relative to the own vehicle position. In the field, the target may be not only the most start point of the automatic traveling route, but also the entrance of the field, the discharge position where the combine harvester discharges stored grains, or the return position where the combine harvester returns from the discharge position. The same problem may occur if these target positions are far from the own vehicle position.

The purpose of this invention is to provide an automatic traveling method, a work vehicle, and an automatic traveling system that can easily determine the positional relationship between a target position and an own vehicle position in a field.

### SOLUTION TO PROBLEM

To solve the above problem, the automatic traveling method of the present invention is a travelling method according to claim 1.

In addition, to solve the above problem, the work vehicle of the present invention is a work vehicle according to claim 7.

In addition, to solve the above problem, the automatic traveling system of the present invention is a traveling system according to claim 8.

### ADVANTAGEOUS EFFECTS OF INVENTION

The present invention provides a traveling method, a work vehicle, and a traveling system that can easily determine the positional relationship between a target position and an own vehicle position in a field.

### BRIEF DESCRIPTION OF DRAWINGS

Fig. 1 is a side view of a combine harvester according to an embodiment of the present invention;
Fig. 2 is a block diagram of the combine harvester according to the embodiment of the present invention;
Fig. 3 is a plan view illustrating an example of a full-view display of a work screen displayed on a portable terminal in the combine harvester according to the embodiment of the present invention;
Fig. 4 is a plan view illustrating an example of an enlarged display of the work screen displayed on the portable terminal when a start position is within a predetermined range in the combine harvester according to the embodiment of the present invention;
Fig. 5 is a plan view illustrating an example of an enlarged display of the work screen displayed on the portable terminal when a start position is out of a predetermined range in the combine harvester according to the embodiment of the present invention;
Fig. 6 is a plan view illustrating another example of a full-view display of the work screen displayed on the portable terminal in the combine harvester according to the embodiment of the present invention;
Fig. 7 is a plan view illustrating an example of a full-view display of a target point of the work screen displayed on the portable terminal in the combine harvester according to the embodiment of the present invention; and
Fig. 8 is a plan view illustrating another example of a full-view display of a target point of the work screen displayed on the portable terminal in the combine harvester according to the embodiment of the present invention.

### DESCRIPTION OF EMBODIMENTS

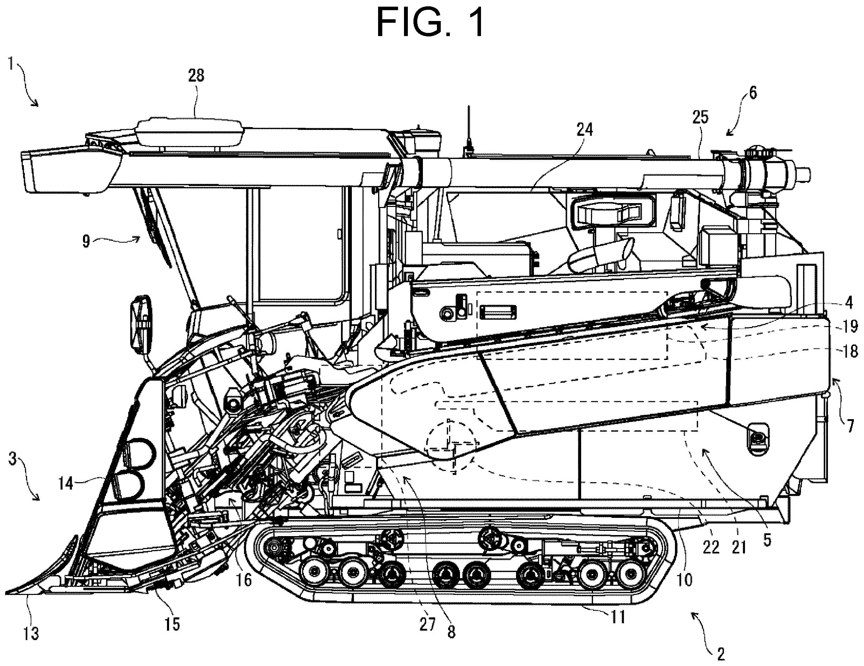

A combine harvester 1 according to an embodiment of the present invention will be described with reference to Fig. 1 and other drawings. The combine harvester 1 travels in a field as an object to be worked by automatic driving or manual operation, and performs work such as reaping for performing harvest work of crops from grain culms planted in the field. The combine harvester 1 is, for example, configured to perform automatic work in which steering is controlled by automatic driving while the traveling speed is controlled in response to manual operation, or unmanned work in which the steering and the traveling speed are controlled by automatic driving, and can travel, turn, and work autonomously in a field.

While traveling on the route of straight rows, a predetermined number of which within the reaping possible row number is a reaping width, relative to a plurality of rows of grain culms, the combine harvester 1 performs reaping work for the straight rows. In the combine harvester 1, a traveling mode, either a manual traveling mode or an automatic traveling mode, is set. The combine harvester 1 is so configured as to perform, when being set to the manual traveling mode, the manual traveling according to steering of a steering part 9 by a worker.

On the other hand, the combine harvester 1 is configured to perform, when being set to the automatic traveling mode, automatic reaping traveling for performing reaping while traveling automatically in accordance with an automatic traveling route set in the field. For example, the combine harvester 1 performs the automatic reaping traveling with a traveling pattern such as reciprocating reaping in which the combine harvester 1 reciprocates between a plurality of automatic traveling routes in a region with unreaped grain culms in the field (hereinafter referred to as an "unworked region"), or circumference reaping in which reaping is repeated by shifting the circumference of the automatic traveling route along an inner circumference of the unworked region toward the center of the unworked region.

Before the combine harvester 1 performs the automatic reaping traveling, the combine harvester 1 performs outer circumference reaping traveling, in which the combine harvester 1 travels circumferentially along the outer circumference of the field while reaping, so that a headland is formed in the field, and the inside of the headland is used as a work area for the automatic reaping traveling.

The combine harvester 1 stores harvested grains from the field while performing the reaping traveling, and when a predetermined storage amount of grains is stored, the combine harvester 1 performs discharge work for discharging the stored grains to a collection part outside the field.

As illustrated in Fig. 1, the combine harvester 1 includes a traveling part 2, a reaping part 3, a threshing part 4, a sorting part 5, a storage part 6, a discharged straw processing part 7, a power part 8, and a steering part 9, and is composed of a so-called head-feeding type combine harvester. The combine harvester 1 travels by the traveling part 2, threshes grain culms reaped by the reaping part 3 in the threshing part 4, sorts the grains in the sorting part 5, and stores the grains in the storage part 6. The combine harvester 1 causes the discharged straw processing part 7 to process threshed discharged straws. The combine harvester 1 drives the traveling part 2, the reaping part 3, the threshing part 4, the sorting part 5, the storage part 6, and the discharged straw processing part 7 with power supplied by the power part 8.

The traveling part 2 is provided below a main body frame 10, and includes a left-and-right pair of crawler type traveling devices 11, and a transmission (not illustrated). The traveling part 2 causes the combine harvester 1 to travel in the front-rear direction, or causes the combine harvester 1 to turn in the left-right direction by rotating crawlers of the crawler type traveling devices 11 with power (for example, rotational power) transmitted from an engine 27 of the power part 8. The transmission transmits the power (rotational power) of the power part 8 to the crawler type traveling devices 11, and is capable of shifting the rotational power.

The reaping part 3 is provided in front of the traveling part 2, and performs reaping work for the rows within the reaping possible row number.
The reaping part 3 includes a divider 13, a raising device 14, a cutting device 15, and a transport device 16. The divider 13 divides the grain culms in the field for each row, and guides, to the raising device 14, the grain culms for a predetermined number of rows within the reaping possible row number. The raising device 14 raises the grain culms guided by the divider 13. The cutting device 15 cuts the grain culms raised by the raising device 14.
The transport device 16 transports the grain culms cut by the cutting device 15 to the threshing part 4.

The threshing part 4 is provided behind the reaping part 3. The threshing part 4 includes a feed chain 18, and a threshing cylinder 19. The feed chain 18 transports the grain culms transported from the transport device 16 of the reaping part 3 in order to thresh, and further transports the threshed grain culms, that is, discharged straw to the discharged straw processing part 7. The threshing cylinder 19 threshes the grain culms transported by the feed chain 18.

The sorting part 5 is provided below the threshing part 4. The sorting part 5 includes a swing sorting device 21, a blower sorting device 22, a grain transport device (not illustrated), and a waste straw discharge device (not illustrated). The swing sorting device 21 sifts the threshed grains that fall from the threshing part 4 and sorts the threshed grains into grains, waste straw, and the like. The blower sorting device 22 further sorts the threshed grains sorted by the swing sorting device 21 into grains, waste straw, and the like by blowing air. The grain transport device transports the grains sorted by the swing sorting device 21 and the blower sorting device 22 to the storage part 6. The waste straw discharge device discharges the waste straw and the like sorted by the swing sorting device 21 and the blower sorting device 22 to the outside of the combine harvester.

The storage part 6 is provided on the right side of the threshing part 4. The storage part 6 includes a grain tank 24, and a discharge device 25. The grain tank 24 stores the grains transported from the sorting part 5. The discharge device 25 is composed of an auger or the like, and discharges the grains stored in the grain tank 24 to any place.

The discharged straw processing part 7 is provided behind the threshing part 4. The discharged straw processing part 7 includes a discharged straw transport device (not illustrated), and a discharged straw cutting device (not illustrated). The discharged straw transport device transports the discharged straws transported from the feed chain 18 of the threshing part 4 to the discharged straw cutting device. The discharged straw cutting device cuts the discharged straws transported by the discharged straw transport device, and discharges the cut discharged straws to the outside of the combine harvester.

The power part 8 is provided above the traveling part 2 and in front of the storage part 6. The power part 8 includes the engine 27 that generates rotational power. The power part 8 transmits the rotational power generated by the engine 27 to the traveling part 2, the reaping part 3, the threshing part 4, the sorting part 5, the storage part 6, and the discharged straw processing part 7.

The steering part 9 is provided above the power part 8. The steering part 9 includes, around a driver's seat which is a seat on which a worker sits, as operation tools for steering the traveling of the combine harvester 1, a steering wheel for instructing turning of the machine body of the combine harvester 1, a main shift lever and a sub-shift lever for instructing change of the forward and backward traveling speed of the combine harvester 1. The manual traveling of the combine harvester 1 is executed by the traveling part 2 that receives the operation of the steering wheel of the steering part 9, the main shift lever, and the sub-shift lever. The steering part 9 includes a mechanism for operating the reaping work by the reaping part 3, the threshing work by the threshing part 4, the discharge work by the discharge device 25 of the storage part 6, and other work.

The combine harvester 1 includes a positioning unit 28 that acquires an own vehicle position of the combine harvester 1 by using a satellite positioning system such as a GPS. The positioning unit 28 receives a positioning signal from a positioning satellite via a positioning antenna, and acquires position information of the positioning unit 28, that is, the own vehicle position of the combine harvester 1 on the basis of the positioning signal.

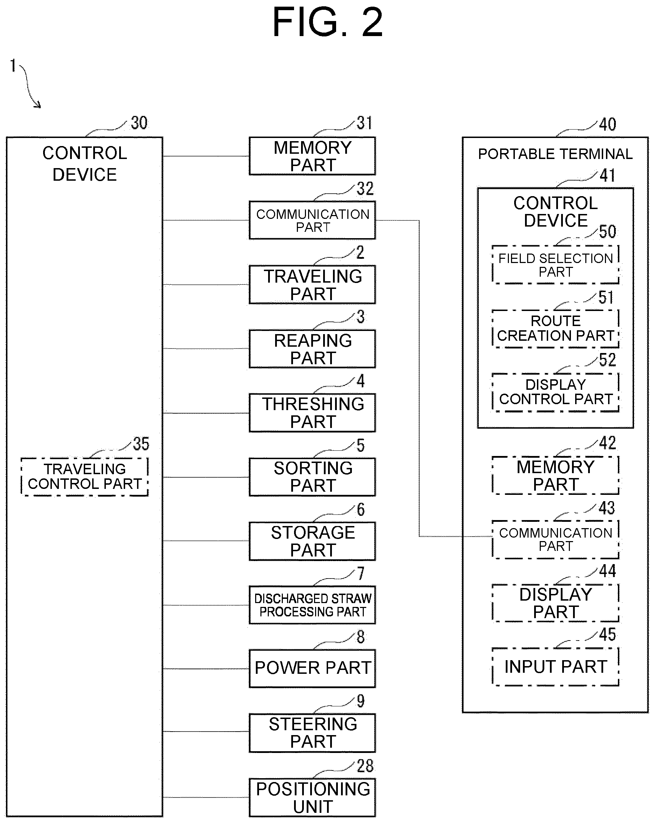

Next, a control device 30 of the combine harvester 1 will be described with reference to Fig. 2. The control device 30 is composed of a computer such as a CPU, and is connected to a communication part 32 that communicates with a memory part 31 such as a ROM, a RAM, a hard disk drive, and a flash memory, and an external device.

The memory part 31 stores a program and data for controlling various types of constituent components and various types of functions of the combine harvester 1, and the control device 30 executes an arithmetic process on the basis of the program and the data stored in the memory part 31, so that the various types of constituent components and the various types of functions are controlled. The control device 30 acquires the own vehicle position of the combine harvester 1 from the positioning unit 28, for example.

The communication part 32 is capable of wirelessly communicating with an external device such as a portable terminal 40 owned by the worker via a wireless communication antenna. The control device 30 controls the communication part 32 to perform wireless communication with the portable terminal 40, and transmits and receives various information to and from the portable terminal 40.

The control device 30 operates as a traveling control part 35 by executing the program stored in the memory part 31. The traveling control part 35 implements an automatic traveling step of an automatic traveling method according to the present invention.

The traveling control part 35 controls the automatic traveling of the combine harvester 1 in a case where an automatic traveling mode is set. For example, the traveling control part 35 acquires field information and an automatic traveling route set for the field from the portable terminal 40. When the automatic reaping traveling is started, the traveling control part 35 acquires the own vehicle position of the combine harvester 1 from the positioning unit 28, and controls the power part 8, the traveling part 2, and the reaping part 3 such that the combine harvester 1 performs the automatic reaping traveling along the automatic traveling route on the basis of the own vehicle position, the field information, and the automatic traveling route.

The portable terminal 40 is one of the constituent components of the combine harvester 1, is a terminal that can remotely operate the combine harvester 1, and is composed of, for example, a tablet terminal equipped with a touch panel, a laptop personal computer, or the like. An operation device similar to the portable terminal 40 may be provided in the steering part 9. In the present invention, the automatic traveling system is constituted by the combine harvester 1 and the portable terminal 40.

As illustrated in Fig. 2, the portable terminal 40 includes a control device 41 composed of a computer such as a CPU, and the control device 41 is connected to a memory part 42 such as a ROM, a RAM, a hard disk drive and a flash memory, and a communication part 43 that communicates with an external device. Further, the portable terminal 40 includes a display part 44, such as a touch panel and a monitor for displaying various information and outputting the various information to the worker, and an input part 45 such as a touch panel and an operation key for receiving an input operation of various information from the worker.

The memory part 42 stores a program and data for controlling various types of constituent components and various types of functions of the portable terminal 40, and the control device 41 executes an arithmetic process on the basis of the program and the data stored in the memory part 42, so that the various types of constituent components and the various types of functions of the portable terminal 40 are controlled. The memory part 42 stores field information of a field which is an object to be worked by the combine harvester 1. The examples of the field information include the shape, the size, and the position information (coordinates and the like) of a field edge constituting an outer circumference of the field, the shape, the size, and the position information (coordinates and the like) of the working area of the field, and a discharge position adjacent to the collection part in the field. The field information also includes information such as the shape, size, and position information (coordinates and the like) of an unworked region where work has not yet been performed and an already worked region where work has already been completed.

The communication part 43 is communicatively connected to the communication part 32 of the combine harvester 1 via a wireless communication antenna. The control device 41 controls the communication part 43 to perform wireless communication with the combine harvester 1 and transmit and receive various information to and from the combine harvester 1.

The control device 41 of the portable terminal 40 operates as a field selection part 50, a route creation part 51, and a display control part 52 by executing the program stored in the memory part 42. The field selection part 50, the route creation part 51, and the display control part 52 implement a field selection step, a route creation step, and a display step of the automatic traveling method according to the present invention.

The field selection part 50 manually or automatically selects the field which is an object to be worked by the automatic traveling. For example, the field selection part 50 displays, on the display part 44, a field selection screen (not illustrated) for selectively displaying a field corresponding to the field information stored in the memory part 42. When any field is selected on the field selection screen in response to manual operation, the field selection part 50 selects the selected field as the object to be worked and reads the field information from the memory part 42. Alternatively, the field selection part 50 may receive, from the combine harvester 1, the own vehicle position of the combine harvester 1 positioned by the positioning unit 28 of the combine harvester 1, and may be able to select a field corresponding to the field information including the own vehicle position of the combine harvester 1 within a range, among the field information stored in the memory part 42, or may automatically select a field.

In addition, the field selection part 50 selects a new field at the own vehicle position of the combine harvester 1 as the object to be worked in a case where the creation of the new field is operated on the field selection screen or in a case where the field information including the own vehicle position of the combine harvester 1 within the range is not stored in the memory part 42. The field selection part 50 creates field information of the new field by receiving, from the combine harvester 1, the own vehicle position of the combine harvester 1 positioned by the positioning unit 28 of the combine harvester 1 and recording the position information of the outer circumference or the position information of the route of the reaping traveling when the combine harvester 1 performs the reaping traveling while circling along the outer circumference of the new field. Then, the field selection part 50 stores the created field information in the memory part 42.

The route creation part 51 creates an automatic traveling route for the automatic reaping traveling in the field selected by the field selection part 50, stores the automatic traveling route in the memory part 42, and sends the automatic traveling route to the combine harvester 1 via the communication part 32. The automatic traveling route includes traveling information related to automatic traveling and work information related to work such as automatic reaping. The traveling information includes the traveling position in the field as well as the traveling direction and the set vehicle speed at each traveling position. The work information includes information about the work such as reaping operation or stop, the reaping speed and the reaping height at each traveling position. The route creation part 51 linearly creates a route for reaping while traveling in the field in the forward direction according to a traveling pattern (reciprocating reaping or circumference reaping) selected by the operation of the portable terminal 40, and creates the automatic traveling route by combining a plurality of the routes.

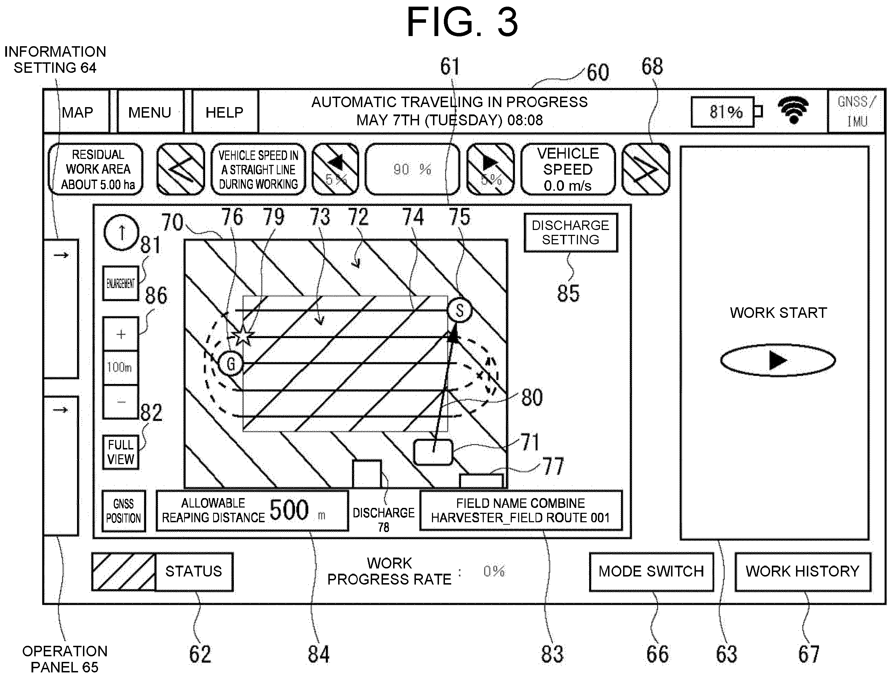

When a field is selected by the field selection part 50 and an automatic traveling route is created by the route creation part 51, the display control part 52 displays, on the display part 44, a work screen 60 for performing automatic traveling according to the automatic traveling route, as shown in Fig. 3.

On the work screen 60, the display control part 52 displays a map field 61, a status lamp 62, a work start button 63, a traveling information setting button 64, an operation panel button 65, a mode switch button 66, a work history button 67, and a route offset button 68. In addition, on the work screen 60, the display control part 52 displays a field registration name 83 based on the field information, an allowable reaping traveling distance 84 based on the vacant capacity of the grain tank 24 in which the combine harvester 1 stores grains, and operatively displays a discharge setting button 85 for setting the discharge position.

On the work screen 60, the display control part 52 displays a map field 61 based on map data. The display control part 52 displays, in the map field 61, a field area 70 along the outer circumference of the field on the map based on the field information of the selected field. In addition, the display control part 52 displays, in the map field 61, an own vehicle marker 71 of the combine harvester 1 at the own vehicle position of the combine harvester 1 positioned by the positioning unit 28 of the combine harvester 1. The display control part 52 identifiably displays an already worked region 72 and an unworked region 73 in the field area 70.

The display control part 52 displays the automatic traveling route 74 created by the route creation part 51 in the field area 70 in a superposed manner. In the map field 61, the display control part 52 displays the straight routes, turning routes, and the like of the automatic traveling routes 74 in a linear form, and identifiably displays each route in a different display format (line color, line type, or the like). In addition, the display control part 52 identifiably displays, as target points indicating the target position of the combine harvester 1 in the field, a start point 75 indicating the start position where the automatic traveling starts, and an end point 76 indicating the end position at which the automatic traveling ends in the field area 70 in a superposed manner. The display control part 52 also identifiably displays an entrance point 77 indicating the entrance of the field, a discharge point 78 indicating the discharge position where the combine harvester 1 discharges stored grains, and a return point 79 where the combine harvester 1 returns to automatic traveling from the discharge position in the field area 70 in a superposed manner.

Furthermore, in the map field 61 of the work screen 60, the display control part 52 displays a straight guideline 80 connecting the own vehicle marker 71 at the own vehicle position of the combine harvester 1 and the start point 75 that is the target point. The display control part 52 identifiably displays the guideline 80 in a different display format (line color, line type, or the like) from the lines indicating the automatic traveling route 74. The display control part 52 updates the display of the guideline 80 according to the progress of the automatic reaping traveling of the combine harvester 1 on the basis of the own vehicle position of the combine harvester 1. In this embodiment, an example of creating a guideline 80 that connects the own vehicle position and the target point in a straight line is described, but the guideline 80 is not limited to a straight line, the guideline 80 may be a combination of two or more straight lines or may include a curve line. In addition, the guideline 80 may be created to avoid the unworked region 73 and only go through the already worked region 72, and in such a case, it is preferable to create a guideline 80 that indicates the shortest distance from the own vehicle position to the target point.

When the work start button 63 is operated and the combine harvester 1 starts automatic traveling, the display control part 52 switches the guideline 80 to non-display. The display control part 52 may switch the guideline 80 to non-display when the combine harvester 1 reaches the start point 75 or when the combine harvester 1 approaches within a predetermined distance from the start point 75.

The display control part 52 operatively displays an enlargement operation part 81 and a full view operation part 82, the enlargement operation part 81 is used to enlarge and display the field area 70 of the field displayed in the map field 61 of the work screen 60 with a partial area of a predetermined range centered on the own vehicle position of the combine harvester 1, and the full view operation part 82 is used to display the entire area of the field area 70. Either one of the enlargement operation part 81 and the full view operation part 82 is in selected state. In addition, the display control part 52 operatively displays a scale change button 86 for enlarging or reducing the display of the field area 70 to a predetermined scale. The display control part 52 is capable of accepting touch operation of the map field 61, and accepts a pinch-in/pinch-out operation to enlarge or reduce the display of the field area 70.

By the way, when the full view operation part 82 is selected and the entire area of the field area 70 is displayed in the map field 61 as shown in Fig. 3, the display control part 52 always displays all of the following: the own vehicle marker 71 at the own vehicle position of the combine harvester 1, the start point 75 that is the target point, and the guideline 80 connecting the own vehicle marker 71 and the start point 75.

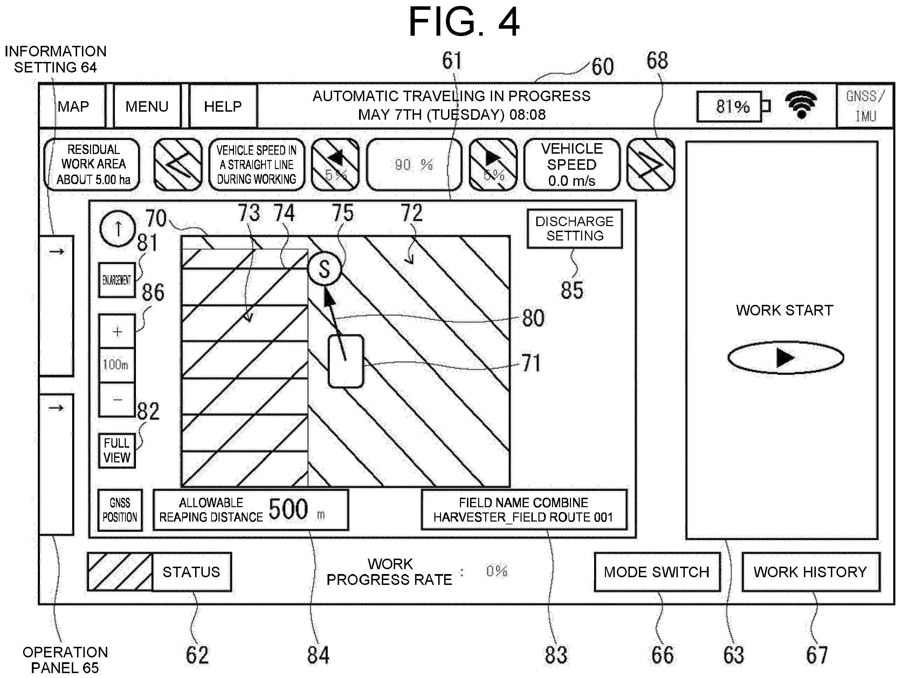

On the other hand, as shown in Fig. 4, when a partial area of the field area 70 is displayed in the map field 61 by selecting the enlargement operation part 81 or operating the scale change button 86 or performing the pinch-in/pinch-out operation, and in a case where the start point 75 is within a predetermined range relative to the own vehicle position of the combine harvester 1, the display control part 52 displays the own vehicle marker 71, the start point 75, and the guideline 80 all in the map field 61.

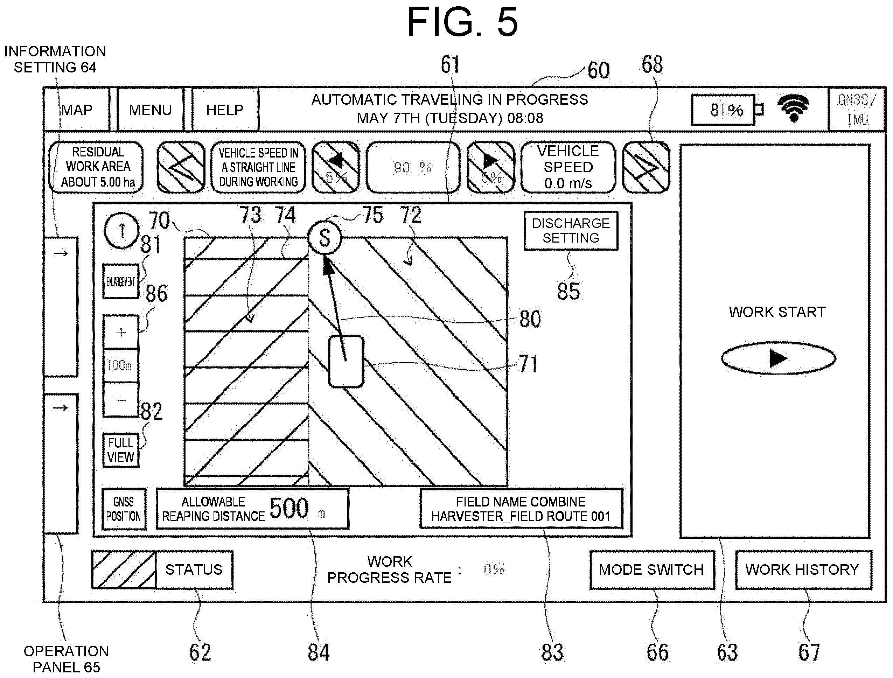

However, as shown in Fig. 5, in a case where the start point 75 is not within a predetermined range relative to the own vehicle position of the combine harvester 1, the own vehicle marker 71 is displayed in the map field 61, but the position of the start point 75 is not settled within the frame of one screen of the map field 61, and the guideline 80 is displayed halfway to the frame of the map field 61. At this time, in order to indicate that the position of the start point 75 is ahead of the guideline 80 relative to the own vehicle position of the combine harvester 1, the display control part 52 displays the start point 75 at the intersection of the guideline 80 and the frame line of the map field 61.

The display control part 52 may always display the guideline 80. The display control part 52 may display the guideline 80 only when the own vehicle marker 71 at the own vehicle position of the combine harvester 1 and the start point 75 that is the target point are not settled within the frame of one screen of the map field 61, and may hide the guideline 80 when the own vehicle marker 71 and the start point 75 are settled within the frame of one screen of the map field 61.

The display control part 52 indicates whether the combine harvester 1 is ready for the automatic reaping traveling by means of the status lamp 62. For example, in a case where the conditions for starting the automatic reaping traveling of the combine harvester 1 are satisfied, the display control part 52 displays the status lamp 62 in a display format indicating that the automatic reaping traveling is possible. In other cases, the display control part 52 displays the status lamp 62 in a display format indicating that the automatic reaping traveling is disabled.

The display control part 52 makes the work start button 63 selectable when the combine harvester 1 is ready for the automatic reaping traveling, while makes the work start button 63 unselectable when the combine harvester 1 is not ready for the automatic reaping traveling.

When the work start button 63 is selected on the work screen 60, the display control part 52 sends information about the field and the automatic traveling route as well as a start instruction to combine harvester 1. The combine harvester 1, in response to the start instruction, performs the automatic reaping traveling along the automatic traveling route, while sending the own vehicle position of the combine harvester 1 positioned by the positioning unit 28 of the combine harvester 1 to the portable terminal 40.

While the combine harvester 1 is performing the automatic reaping traveling according to the start instruction for the automatic reaping traveling, the display control part 52, selectably displays, on the work screen 60, a work stop button instead of the work start button 63. When the work stop button is selected on the work screen 60, the display control part 52 sends a stop instruction to the combine harvester 1. The combine harvester 1 ends the automatic reaping traveling in response to the stop instruction. When the combine harvester 1 ends the automatic reaping traveling, the display control part 52 displays, on the work screen 60, the work start button 63 instead of the work stop button. The displaying of the own vehicle marker 71 of the combine harvester 1 as well as the already worked region 72 and the unworked region 73, and the presenting of the allowable reaping traveling distance 84 are updated based on the own vehicle position of the combine harvester 1 according to the progress of the automatic reaping traveling of the combine harvester 1.

When the traveling information setting button 64 is selected on the work screen 60, the display control part 52 displays, on the display part 44, a traveling information setting screen (not illustrated) for setting the traveling information. The traveling information includes the ratio of forward vehicle speed, turning vehicle speed, backward vehicle speed, and the like relative to the speed set by the main shift lever of the steering part 9, and acceleration stages of soft, standard, quick, and the like.

When the operation panel button 65 is selected on the work screen 60, the display control part 52 displays, on the display part 44, an operation panel screen (not illustrated) for setting information about the automatic reaping traveling. The information about the automatic reaping traveling includes, for example, the reaping start position at which reaping starts for the starting end of each row.

When the mode switch button 66 is selected on the work screen 60, the display control part 52 ends the automatic reaping traveling and switches to the manual traveling.

When the work history button 67 is selected on the work screen 60, the display control part 52 displays, on the display part 44, a work history screen (not illustrated) for confirming the work history of the field.

When the route offset button 68 is selected on the work screen 60, the display control part 52 sends an offset instruction to the combine harvester 1. In response to the offset instruction, the combine harvester 1 moves diagonally relative to the automatic traveling route, thereby moving parallel by the amount of a set route offset target value to change the position thereof in the left-right direction of the main body.

As described above, according to this embodiment, the combine harvester 1 is a work vehicle that performs automatic traveling in a field and is equipped with the control device 30 and the portable terminal 40. The portable terminal 40 includes the control device 41 and the display part 44. The control device 41 functions as the display control part 52 to display, on the display part 44, the automatic traveling route 74 for performing automatic traveling to the unworked region 73 in the field, the start point 75 that is the target point indicating the target position of the combine harvester 1 in the field, the own vehicle marker 71 indicating the own vehicle position of the combine harvester 1, and the guideline 80 connecting the start point 75 and the own vehicle marker 71.

In other words, in the present invention, an automatic traveling method for causing a work vehicle such as the combine harvester 1 to perform automatic traveling in a field includes displaying the automatic traveling route 74 for performing automatic traveling to the unworked region 73 in the field, the start point 75 that is the target point indicating the target position of the combine harvester 1 in the field, the own vehicle marker 71 indicating the own vehicle position of the combine harvester 1, and the guideline 80 connecting the start point 75 and the own vehicle marker 71 on the display part 44.

This allows the worker to easily determine the target position by displaying the guideline 80 that indicates a line from the own vehicle position of the combine harvester 1 to the target position. In particular, even when the own vehicle position of the combine harvester 1 and the target position are not settled within one screen of the display part 44, the worker can easily determine the positional relationship between the target position and the own vehicle position in the field by referring to the guideline 80.

According to this embodiment, the combine harvester 1 sets, as the target point, the start point 75 that indicates the start position where the combine harvester 1 starts the automatic traveling on the automatic traveling route.

This allows the worker to easily determine the start position, even when the start position of the automatic traveling is separated from the own vehicle position of the combine harvester 1, thereby the automatic traveling can be started smoothly.

According to this embodiment, the display control part 52 switches the guideline 80 to non-display when the combine harvester 1 starts the automatic traveling.

This allows the display/non-display of the guideline 80 to be automatically switched as necessary, so that after the combine harvester 1 starts the automatic traveling, the guideline 80 is hidden. Thereby, the worker can easily confirm the automatic traveling route 74 displayed on the display part 44, and the automatic traveling can be performed smoothly.

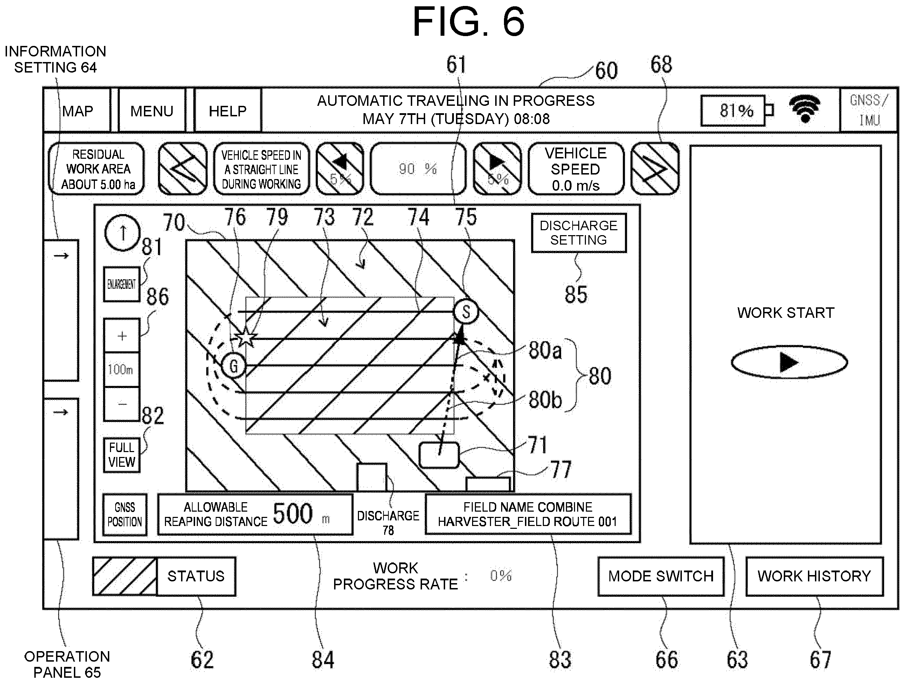

In this embodiment, an example in which the display control part 52 displays the guideline 80 in a single display format in the map field 61 is described, but the present invention is not limited to this example. In another example, as shown in Fig. 6, the display control part 52 may identifiably display the guideline 80, with a line 80a passing through the already worked region 72 and a line 80b passing through the unworked region 73, in different display formats (line color, line type, or the like).

This allows the worker to easily confirm that there is an unworked region 73 between the own vehicle position of the combine harvester 1 and the target position, thereby the worker can move the combine harvester 1 to the target position while avoiding the unworked region.

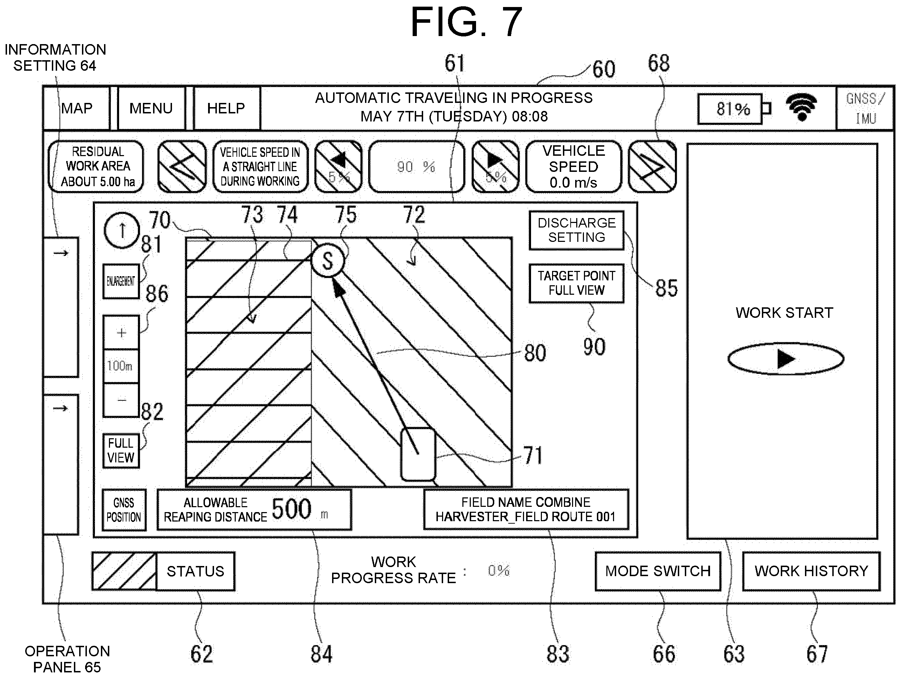

In addition, in this embodiment, an example in which the enlargement operation part 81 for enlarging and displaying a partial area of the field and the full view operation part 82 for displaying the entire area of the field are operatively displayed on the work screen 60 is described, but the present invention is not limited to this example. In another example, as shown in Fig. 7, the display control part 52 may operatively display a target point full view operation part 90 in addition to the enlargement operation part 81 and the full view operation part 82. The target point full view operation part 90 is used to display the own vehicle marker 71 and the start point 75 by changing the display magnification so that the own vehicle marker 71 and the start point 75 are settled within the frame of one screen of the map field 61. When the target point full view operation part 90 is selected, the display control part 52 displays, regardless of the distance relationship between the own vehicle position of the combine harvester 1 and the start position where the automatic traveling starts, the own vehicle marker 71 and the start point 75 by changing the display magnification so that the own vehicle marker 71 and the start point 75 are settled within the frame of one screen of the map field 61, and displays the entire guideline 80.

Accordingly, even when the own vehicle position of the combine harvester 1 and the target position are relatively far apart, the own vehicle position of the combine harvester 1 and the target position can be enlarged and displayed in such a manner that the own vehicle position of the combine harvester 1 and the target position are settled within one screen of the display part 44 regardless of the positional relationship between the own vehicle position and the target position. This makes it easier for the worker to simultaneously confirm the own vehicle position of the combine harvester 1 and the target position.

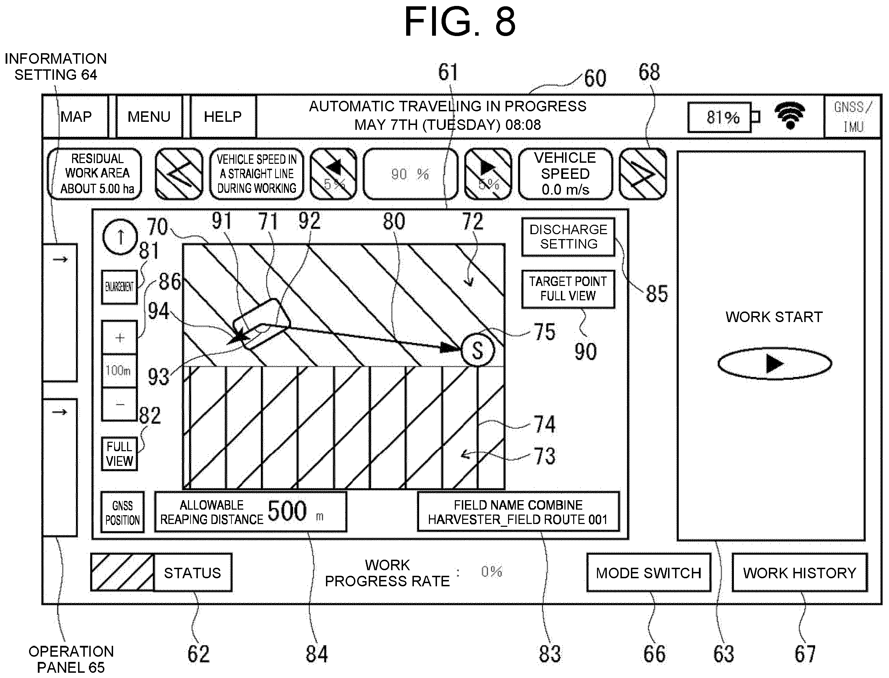

In this embodiment, an example in which, regardless of the traveling direction of the combine harvester 1, the display control part 52 displays the guideline 80 in a single display format in the map field 61 is described, but the present invention is not limited to this example. In another example, as shown in Fig. 8, the display control part 52 may change the display format of the guideline 80 according to an angle 93 between the traveling direction 91 of the combine harvester 1 at the own vehicle position and the target direction 92 from the own vehicle position of the combine harvester 1 toward the start point 75 that is the target point. At this time, the display control part 52 displays the guideline 80 with a black line or the like normally in a case where the traveling direction 91 of the combine harvester 1 is toward the start point 75, while in a case where the traveling direction 91 of the combine harvester 1 is not toward the start point 75, the guideline 80 is displayed with a red line or the like to indicate caution. For example, in a case where the angle 93 of the traveling direction 91 of the combine harvester 1 with respect to the target direction 92 from the own vehicle position of the combine harvester 1 toward the start point 75 is within plus or minus 60 degrees, the display control part 52 determines that the combine harvester 1 is heading toward the start point 75; otherwise, the display control part 52 determines that the combine harvester 1 is not heading toward the start point 75.

This allows the worker, by referring to guideline 80, to easily confirm that the combine harvester 1 is not heading toward the target position such as the start point 75, and recognize that the combine harvester 1 is traveling in the wrong direction.

In yet another example, the display control part 52 displays a direction marker 94 indicating the traveling direction 91 of the combine harvester 1, and the display control part 52 may change the display format of the direction marker 94 according to the angle 93 between the traveling direction 91 of the combine harvester 1 at the own vehicle position and the target direction 92 from the own vehicle position toward the start point 75 that is the target point. At this time, as shown in Fig. 8, the display control part 52 displays the direction marker 94 such as an arrow or the like pointing from the own vehicle marker 71 to the start point 75 along the guideline 80. In addition, the display control part 52 displays the direction marker 94 with a black arrow or the like normally in a case where the traveling direction 91 of the combine harvester 1 is toward the start point 75, while in a case where the traveling direction 91 of the combine harvester 1 is not toward the start point 75, the direction marker 94 is displayed with a red arrow or the like to indicate caution. For example, in a case where the angle 93 of the traveling direction 91 of the combine harvester 1 with respect to the target direction 92 from the own vehicle position of the combine harvester 1 toward the start point 75 is within plus or minus 60 degrees, the display control part 52 determines that the combine harvester 1 is heading toward the start point 75; otherwise, the display control part 52 determines that the combine harvester 1 is not heading toward the start point 75.

This allows the worker, by referring to the direction marker 94 of the combine harvester 1, to easily confirm that the combine harvester 1 is not heading toward the target position such as the start point 75, and recognize that the combine harvester 1 is traveling in the wrong direction.

In this embodiment, an example in which the display control part 52 also sets the start point 75 indicating the start position to start the automatic traveling as the target point indicating the target position of the combine harvester 1 in the field is described, but the present invention is not limited to this example.

After the combine harvester 1 starts the automatic reaping traveling in the field, and before the combine harvester 1 completes work on all unworked regions, the combine harvester 1 may interrupt the automatic reaping traveling and move, and may set an interruption position of the automatic reaping traveling to a return position and restart the automatic reaping traveling from the return position. For example, when the storage volume of the grain tank 24 in the storage part 6 expires during the automatic reaping traveling, the combine harvester 1 needs to interrupt the automatic reaping traveling and move to a discharge position provided on an outer periphery of the field to discharge the stored grains. In another example, the display control part 52 may, in the map field 61 of the work screen 60, set the discharge point 78 indicating the discharge position as the target point indicating the target position of the combine harvester 1, and display a straight guideline 80 connecting the own vehicle marker 71 at the own vehicle position of the combine harvester 1 and the discharge point 78 that is the target point.

When the combine harvester 1 has completed discharging the grains, the combine harvester 1 needs to move to the interruption position (return position) of the automatic reaping traveling in order to restart the automatic reaping traveling. In another example, the display control part 52 may, in the map field 61 of the work screen 60, set the return point 79 indicating the return position as the target point indicating the target position of the combine harvester 1, and display a straight guideline 80 connecting the own vehicle marker 71 at the own vehicle position of the combine harvester 1 and the return point 79 that is the target point.

In the combine harvester 1, the route creation part 51 of the portable terminal 40 combines a plurality of straight routes and a turning route connecting each straight route to create an automatic traveling route for automatic traveling, and the combine harvester 1 may perform automatic traveling on each straight route while performing manual traveling on the turning route. In a case where two straight routes connected by a turning route are separated from each other, these two straight routes may not be settled within the frame of one screen in the map field 61. In another example, when the combine harvester 1 ends automatic traveling on one straight route and performs manual traveling on a turning route toward next straight route, the display control part 52 may set the start position of the next straight route as the target point indicating the target position the combine harvester 1 and may display a straight guideline 80 connecting the own vehicle marker 71 at the own vehicle position of the combine harvester 1 and the start position of the next straight route that is the target point.

In the above embodiments, the example of the combine harvester 1 composed of the head-feeding type combine harvester is described. However, the present invention is not limited to this example, and the combine harvester 1 may be composed of an ordinary-type combine harvester.

In the above embodiments, an example in which the work vehicle is composed of the combine harvester 1 is described, but the present invention is not limited to this example. For example, the work vehicle of the resent invention may be composed of other agricultural work machine such as a tractor and a rice transplanter, or may be composed of a work vehicle other than the agricultural work machine.

### REFERENCE SIGNS LIST

1: Combine harvester (work vehicle)
2: Traveling part
3: Reaping part
30: Control device
35: Traveling control part
40: Portable terminal
41: Control device
44: Display part
52: Display control part
60: Work screen
71: Own vehicle marker
72: Already worked region
73: Unworked region
74: Automatic traveling route
75: Start point (target point)
80: Guideline
80a: Line
80b: Line
81: Enlargement operation part
82: Full view operation part
90: Target point full view operation part
91: Traveling direction
92: Target direction
93: Angle
94: Direction marker

## Claims

1. A traveling method for causing a work vehicle to perform automatic traveling in a field, the method comprising:
a display step for displaying, on a display part (44), an automatic traveling route (74) for performing automatic traveling in an unworked region (73) in the field, a target point indicating a target position of the work vehicle in the field, an own vehicle position of the work vehicle, and a guideline (80) connecting the target point and the own vehicle position,
an automatic traveling step on the automatic traveling route (74),
**characterized in that**, in the display step, a display format in which the guideline (80) is displayed is different between an unworked region (73) and an already worked region in the field (72).

2. The traveling method according to claim 1, wherein:
the target point is a start point (75) indicating a start position where the work vehicle starts automatic traveling on the automatic traveling route (74).

3. The traveling method according to claim 1 or 2, wherein:
in the display step, the guideline (80) is switched to non-display when the work vehicle starts automatic traveling.

4. The traveling method according to any one of claims 1 to 3, wherein:
in the display step, in response to enlargement operation performed on the display part (44), the target point and the own vehicle position are displayed in a changed display magnification, in such a manner as to be settled within one screen.

5. The traveling method according to any one of claims 1 to 4, wherein:
in the display step, the display format of the guideline (80) is changed according to an angle between a traveling direction of the work vehicle at the own vehicle position and a target direction from the own vehicle position to the target point.

6. The traveling method according to any one of claims 1 to 5, wherein:
in the display step, a direction marker (94) indicating a traveling direction of the work vehicle is displayed, and the display format of the direction marker (94) is changed according to an angle between the traveling direction of the work vehicle at the own vehicle position and a target direction from the own vehicle position to the target point.

7. A work vehicle configured to perform automatic traveling in a field, the work vehicle comprising:
a display part (44) configured to perform the steps of any one of claims 1 to 6.

8. A traveling system adapted for causing a work vehicle to perform automatic traveling in a field, the system comprising:
a display part (44) configured to perform the steps of any one of claims 1 to 6.

## Patentansprüche

1. Fahrverfahren zum Veranlassen eines Arbeitsfahrzeugs, ein automatisches Fahren auf einem Feld durchzuführen, wobei das Verfahren Folgendes umfasst:
einen Anzeigeschritt zum Anzeigen einer automatischen Fahrstrecke (74) zum Durchführen eines automatischen Fahrens in einer nicht bearbeiteten Region (73) auf dem Feld, wobei ein Zielpunkt eine Zielposition des Arbeitsfahrzeugs auf dem Feld anzeigt, einer eigenen Fahrzeugposition des Arbeitsfahrzeugs und einer Führungslinie (80) die den Zielpunkt und die eigene Fahrzeugposition verbindet, auf einem Anzeigeteil (44),
einen automatischen Fahrschritt auf der automatischen Fahrstrecke (74),
**dadurch gekennzeichnet, dass** sich im Anzeigeschritt ein Anzeigeformat, in dem die Führungslinie (80) angezeigt wird, zwischen einer nicht bearbeiteten Region (73) und einer bereits bearbeiteten Region auf dem Feld (72) unterscheidet.

2. Fahrverfahren nach Anspruch 1, wobei:
der Zielpunkt ein Startpunkt (75) ist, der eine Startposition anzeigt, wo das Arbeitsfahrzeug ein automatisches Fahren auf der automatischen Fahrstrecke (74) startet.

3. Fahrverfahren nach Anspruch 1 oder 2, wobei:
im Anzeigeschritt die Führungslinie (80) auf eine Nichtanzeige umgeschaltet wird, wenn das Arbeitsfahrzeug das automatische Fahren startet.

4. Fahrverfahren nach einem der Ansprüche 1 bis 3, wobei:
in Reaktion auf eine Vergrößerungsoperation, die auf dem Anzeigeteil (44) durchgeführt wird, der Zielpunkt und die eigene Fahrzeugposition im Anzeigeschritt in einer geänderten Anzeigevergrößerung in einer Weise angezeigt werden, dass sie auf einem Bildschirm angeordnet werden.

5. Fahrverfahren nach einem der Ansprüche 1 bis 4, wobei:
im Anzeigeschritt das Anzeigeformat der Führungslinie (80) gemäß einem Winkel zwischen einer Fahrtrichtung des Arbeitsfahrzeugs an der eigenen Fahrzeugposition und einer Zielrichtung von der eigenen Fahrzeugposition zum Zielpunkt geändert wird.

6. Fahrverfahren nach einem der Ansprüche 1 bis 5, wobei:
im Anzeigeschritt ein Richtungsmarker (94) angezeigt wird, der eine Fahrtrichtung des Arbeitsfahrzeugs anzeigt, und das Anzeigeformat des Richtungsmarkers (94) gemäß einem Winkel zwischen der Fahrtrichtung des Arbeitsfahrzeugs an der eigenen Fahrzeugposition und einer Zielrichtung von der eigenen Fahrzeugposition zum Zielpunkt geändert wird.

7. Arbeitsfahrzeug, das dazu ausgelegt ist, ein automatisches Fahren auf einem Feld durchzuführen, wobei das Arbeitsfahrzeug Folgendes umfasst:
ein Anzeigeteil (44), das dazu ausgelegt ist, die Schritte von einem der Ansprüche 1 bis 6 durchzuführen.

8. Fahrsystem, das zum Veranlassen eines Arbeitsfahrzeugs, ein automatisches Fahren auf einem Feld durchzuführen, angepasst ist, wobei das System Folgendes umfasst:
ein Anzeigeteil (44), das dazu ausgelegt ist, die Schritte von einem der Ansprüche 1 bis 6 durchzuführen.

## Revendications

1. Procédé de déplacement pour amener un véhicule de travail à effectuer un déplacement automatique dans un champ, le procédé comprenant :
une étape d'affichage pour afficher sur une partie affichage (44) un itinéraire de déplacement automatique (74) pour effectuer un déplacement automatique dans une région non travaillée (73) dans le champ, un point cible indiquant une position cible du véhicule de travail dans le champ, une position de véhicule propre du véhicule de travail, et une ligne de guidage (80) connectant le point cible et la position de véhicule propre,
une étape de déplacement automatique sur l'itinéraire de déplacement automatique (74),
**caractérisé en ce que**, à l'étape d'affichage, un format d'affichage dans lequel la ligne de guidage (80) est affichée est différent entre une région non travaillée (73) et une région déjà travaillée dans le champ (72).

2. Procédé de déplacement selon la revendication 1, dans lequel :
le point cible est un point de départ (75) indiquant une position de départ où le véhicule de travail commence le déplacement automatique sur l'itinéraire de déplacement automatique (74).

3. Procédé de déplacement selon la revendication 1 ou 2, dans lequel :
à l'étape d'affichage, la ligne de guidage (80) passe à un mode de non affichage lorsque le véhicule de travail commence un déplacement automatique.

4. Procédé de déplacement selon l'une des revendications 1 à 3, dans lequel :
à l'étape d'affichage, en réponse à une opération d'agrandissement effectuée sur la partie affichage (44), le point cible et la position de véhicule propre sont affichés dans un grossissement d'affichage modifié de manière à être réglés dans un seul écran.

5. Procédé de déplacement selon l'une des revendications 1 à 4, dans lequel :
à l'étape d'affichage, le format d'affichage de la ligne de guidage (80) est modifié selon un angle entre une direction de déplacement du véhicule de travail à la position de véhicule propre et une direction cible allant de la position de véhicule propre au point cible.

6. Procédé de déplacement selon l'une des revendications 1 à 5, dans lequel :
à l'étape d'affichage, un marqueur de direction (94) indiquant une direction de déplacement du véhicule de travail est affiché, et le format d'affichage du marqueur de direction (94) est modifié selon un angle entre la direction de déplacement du véhicule de travail à la position de véhicule propre et une direction cible allant de la position de véhicule propre au point cible.

7. Véhicule de travail configuré pour effectuer un déplacement automatique dans un champ, le véhicule de travail comprenant :
une partie affichage (44) configurée pour effectuer les étapes de l'une des revendications 1 à 6.

8. Système de déplacement adapté pour amener un véhicule de travail à effectuer un déplacement automatique dans un champ, le système comprenant :
une partie affichage (44) configurée pour effectuer les étapes de l'une des revendications 1 à 6.
